# EUROPÄISCHE PATENTANMELDUNG

(11) **EP 2 048 025 A1**
(43) Veröffentlichungstag der Anmeldung: **15.04.2009**
(21) Anmeldenummer: 08013879.5
(22) Anmeldetag: 02.08.2008
(51) Int. Cl.: B60P 1/26, B60P 1/28, B60P 1/16

(54) **Schüttgut-Nutzfahrzeug**

(30) Priorität: 09.10.2007 DE 202007014067 U
(71) Anmelder: Krampe Landtechnik und Metallbau GmbH, 48653 Coesfeld-Lette (DE)
(72) Erfinder: Krampe, August, 48653 Coesfeld-Lette (DE); Wienker, Heinrich, 48653 Coesfeld-Lette (DE); Tubes, Stefan, 46325 Borken (DE); Roters, Klaus, 48619 Heek (DE)
(74) Vertreter: Habbel, Ludwig

(57) **Zusammenfassung**

Schüttgut-Nutzfahrzeug,
mit einer die Nutzlast aufnehmenden Wanne,
und mit die Wanne begrenzenden Seitenwänden, welche wenigstens eine Seiteklappe aufweisen,
wobei die Seitenklappe zwischen einer Offen- und einer Schließstellung um eine von der Unterkante der Seitenklappe nach oben beabstandete und in Fahrzeuglängsrichtung verlaufende Achse beweglich ist, derart, dass bei angekippter Wanne und geöffneter Seitenklappe die Nutzlast seitlich aus der Wanne abströmen kann, wobei
eine Verschlussleiste (8) vorgesehen ist,
welche nahe der Unterkante der Seitenklappe schwenkbar gelagert ist,
in einer stehenden, als Verschlussstellung bezeichneten Ausrichtung die in ihrer Schließstellung befindliche Seitenklappe entlang deren Unterkante abdichtet,
und aus der Schließstellung in eine liegende Freigabestellung beweglich ist, wobei
ein Ablaufblech vorgesehen ist,
welches liegend ausgerichtet und von der Wanne aus nach außen weisend angeordnet ist
und um dieselbe Achse wie die Verschlussleiste schwenkbar gelagert ist.

## Beschreibung

Die Erfindung betrifft ein Schüttgut-Nutzfahrzeug mit einer die Nutzlast aufnehmenden Wanne, entsprechend dem Oberbegriff des Anspruchs 1.

Derartige Fahrzeuge sind als LKW oder als Anhänger aus der Praxis bekannt. Sie können beispielsweise in der Landwirtschaft eingesetzt werden und weisen üblicherweise einteilige Seitenklappen auf, die entlang ihrer Oberkante schwenkbeweglich gelagert sind und beispielsweise die untere Hälfte der Seitenwände der Wanne ausmachen. Die Wanne ist zur Seite kippbar gelagert, also um eine Schwenkachse, die in Längsrichtung des Fahrzeugs verläuft. Bedingt durch den Innendruck des geladenen Schüttgutes verschwenken die Seitenklappen automatisch aus ihrer Schließstellung in eine Offenstellung, wenn die Wanne zur Seite gekippt wird und die Seitenklappen vorher entriegelt worden sind.

Bei derartigen Fahrzeugen steht häufig das Problem, das Abkippen über die Fahrzeugreifen zu ermöglichen. Dies führt häufig dazu, dass der Schwerpunkt der Wanne fahrdynamisch nachteilig weit oben vorgesehen ist.

Der Erfindung liegt die Aufgabe zugrunde, ein gattungsgemäßes Nutzfahrzeug dahingehend zu verbessern, dass dieses einen möglichst tiefen Schwerpunkt aufweisen kann, wobei eine gute Dichtigkeit der Wanne bei geschlossenen Seitenklappen sichergestellt ist.

Diese Aufgabe wird durch ein Schüttgut-Nutzfahrzeug mit den Merkmalen des Anspruchs 1 gelöst.

Die Erfindung schlägt mit anderen Worten vor, an der Wanne eine Verschlussleiste vorzusehen, die von außen gegen die geschlossene Seitenklappe geführt werden kann, so dass diese Verschlussleiste die Seitenklappe anpresst und in ihrer Schließstellung hält. Dabei sind nicht nur einige punktuelle Angriffspunkte vorgesehen, wo die Seitenklappe in ihre Schließstellung gedrückt wird, sondern dadurch, dass die Verschlussleiste als längliche Leiste ausgestaltet ist, wird ein gleichmäßiger Anlagedruck sichergestellt, so dass die Seitenklappe zuverlässig dicht schließt. Zudem dient die Verschlussleiste selbst auch noch als zusätzliche Dichtungsleiste, so dass die zuverlässige Dichtigkeit der geschlossenen Wanne sichergestellt ist.

Sobald die Verschlussleiste geöffnet wird und somit die Seitenklappe frei gibt, kann die Wanne zur Seite gekippt werden, so dass dann automatisch die Seitenklappe öffnet. Um das abzuladende Schüttgut ausreichend weit seitlich neben das Nutzfahrzeug zu leisten, ist als zweite vorschlagsgemäße Maßnahme ein Ablaufblech vorgesehen, welches quasi den Wannenboden seitlich nach außen verlängert und das Schüttgut entsprechend weit seitlich führt, so dass dieses beispielsweise über die Reifen des Nutzfahrzeugs hinweg zur Seite geführt wird, bevor das weiter herabfallen kann. Um zu verhindern, dass beim Ankippen der Wanne das Ablaufblech auf die Reifen des Nutzfahrzeugs drückt, ist das Ablaufblech schwenkbar gelagert. Eine besonders kompakte, flach bauende Bauform wird dadurch erreicht, dass das Ablaufblech um dieselbe Achse schwenkbar ist wie die erwähnte Verschlussleiste, so dass der Schwerpunkt der Wanne möglichst niedrig gehalten werden kann. Die aufgeschwenkte Verschlussleiste dient in der Offenstellung, in welcher sie die Seitenklappe freigibt, als Abdichtung zwischen dem Wannenboden und dem Ablaufblech.

Vorteilhaft kann die Verschlussleiste mittels einer über Übertotpunkt-Kinematik selbsthaltend in ihrer Schließstellung gehalten werden. Auf diese Weise kann sichergestellt werden, dass die Verschlussleiste nicht versehentlich öffnet, allein aufgrund des Innendrucks der gegen die Seitenklappe wirkt, so dass ein versehentliches Öffnen der Seitenklappen verhindert wird.

Vorteilhaft kann die gemeinsame Schwenkachse der Verschlussleiste und des Ablaufblechs durch eine Lagerachse gebildet werden, die sich durch mehrere hintereinander angeordnete Hülsen erstreckt. Einige dieser Hülsen sind mit der Verschlussleiste verbunden, so dass diese um die Lagerachse schwenkbar ist. Andere dieser Hülsen sind mit dem Ablaufblech verbunden, so dass dieses ebenfalls um dieselbe Schwenkachse beweglich ist wie die Verschlussleiste. Weitere Hülsen auf der Lagerachse sind vorgesehen, die mit der Wanne verbunden sind und so die Lagerachse zuverlässig an ihrer vorgesehenen Position halten und zuverlässig in dem gewünschten Verlauf halten, beispielsweise als geradlinig verlaufende Welle, so dass die Welle durch diese mehrfache Lagerung zuverlässig gegen Durchbiegungen oder Verformungen geschützt ist. Dadurch, dass vorteilhaft diese Hülsen abwechselnd angeordnet sind, wird eine stabile Lagerung über die gesamte Länge der Lagerachse für die Verschlussleiste und auch für das Ablaufblech sichergestellt.

Vorteilhaft kann die Seitenklappe so ausgestaltet sein, dass sie ohne zusätzlich einwirkende Kräfte, also zwanglos, eine Stellung einnimmt, an welcher sie in ihren oberen Lagerungen hängt, mit ihrer Unterkante allerdings nicht ihre Schließstellung einnimmt, sondern vielmehr einen Spalt zur Wanne verbleiben lässt und somit etwas geöffnet ist. Eine solche Ausrichtung der Seitenklappe ergibt sich beispielsweise dann, wenn die Wanne im Querschnitt nach unten verrundet oder konisch eingezogen ist, beispielsweise um im unteren Bereich ausreichend Freiraum zu den Rädern hin zu schaffen oder um insbesondere durch die bauchige Form das Abrutschen der Ladung bei gekippter Wanne zu begünstigen und somit den Entladungsvorgang zu unterstützen. Bei einer solchen nach unten und innen eingezogen verlaufenden Silhouette der Seitenklappe ergibt sich, dass bei frei pendelnder, zwangloser Aufhängung der Seitenklappe diese nicht ihre völlig geschlossene Schließstellung einnimmt, sondern dass beispielsweise entlang der Unterkante der Seitenklappe ein Spalt von beispielsweise 10 cm Breite verbleibt. Vorzugsweise ist dabei dann vorgesehen, dass die Verschlussleiste schmaler als diese 10 cm ausgestaltet ist, jedenfalls so schmal bemessen ist, dass sie aus ihrer liegenden Freigabestellung in eine aufrechte Verschlussstellung verschwenkt werden kann, ohne dabei gegen die Unterkante der Seitenklappe zu geraten. Somit wird bei einer versehentlichen Betätigung der Verschlussleiste eine Beschädigung dieser Verschlussleiste oder der Seitenklappe zuverlässig verhindert, wenn bei Betätigung der Verschlussleiste die Seitenklappe noch nicht vorschriftsmäßig geschlossen sein sollte.

Eine provisorische Halterung der Seitenklappe in ihrer Schließstellung kann vorzugsweise magnetisch erfolgen. Dies bewirkt einerseits, dass die Seitenklappe problemlos geschlossen werden kann: Wenn die zunächst geöffnete Seitenklappe beim Zurückkippen der Wanne langsam wieder sich ihrer Schließstellung annähert und beispielsweise in der vorerwähnten frei pendelnden Stellung verharrt, reicht ein kurzer Druck gegen die Seitenklappe, mit wenig Kraftaufwand, dass aufgrund der Magnetkraft die Seitenklappe nun ihre Schließstellung einnimmt und beibehält. Anschließend kann eine Sicherung dieser Schließstellung dadurch erfolgen, dass die Verschlussleiste in ihre Verschlussstellung geführt wird, so dass nun die Seitenklappe auch bei höheren von innen einwirkenden Kräften zuverlässig ihre Schließstellung beibehält.

Weiterhin ist beim umgekehrten Bewegungsablauf eine robuste, beschädigungssichere Ausgestaltung der Seitenklappe dadurch gegeben, dass nach Lösen der Verschlussleiste die Seitenklappe problemlos aus ihrer Schließstellung in ihre Offenstellung verschwenken kann, wenn im Zuge des Kippvorgangs der auf die Seitenklappe einwirkende Druck, der als Innendruck in der Wanne durch das Schüttgut auf die Seitenklappe einwirkt, so groß wird, dass die Magnetkräfte überwunden werden und die Seitenklappe nun in ihre Offenstellung aufschwingen kann. Im Vergleich zu mechanischen Haltemitteln ist sichergestellt, dass keine Überlastung erfolgen kann, die zu einer Beschädigung dieser Haltemittel führen können, sondern bei Überschreiten einer gewissen Kraft gibt der magnetische Verschluss die Seitenklappe einfach frei, ohne dabei überlastet oder beschädigt zu werden.

Die Verschlussleiste kann vorteilhaft kraftbetätigt angetrieben sein, beispielsweise mechanisch oder pneumatisch. Auf diese Weise ist eine einfache und zeitsparende Betätigung vom Führerstand des Nutzfahrzeugs aus möglich, und es können hohe Schließkräfte aufgebracht werden. Vorteilhaft kann die Verschlussleiste hydraulisch angetrieben werden, so dass die ohnehin vorhandene, fahrzeugeigene Hydraulik zur Betätigung der Verschlussleiste genutzt werden kann und der kraftbetätigte Antrieb wirtschaftlich hergestellt werden kann. Insbesondere, wenn dabei die vorerwähnte Übertotpunkt-Kinematik verwendet wird, ist sichergestellt, dass auch bei Ausfall der Hydraulik oder wenn beispielsweise ein Fahrzeuganhänger vom Zugfahrzeug abgekoppelt und somit nicht mehr hydraulisch versorgt wird, die Verschlussleiste zuverlässig ihre Schließstellung beibehält und die Seitenklappe zuverlässig in ihrer Schließstellung gesichert ist.

Das Ablaufblech kann vorzugsweise als Kotflügel für das Nutzfahrzeug dienen. Auf diese Weise müssen keine separaten Kotflügel verwendet werden, so dass die Ausgestaltung des Nutzfahrzeugs möglichst wirtschaftlich erfolgen kann und zudem kann so eine möglichst niedrige Anordnung der Ablaufleiste und damit der gesamten Wanne und auf diese Weise ein möglichst niedriger Schwerpunkt des Nutzfahrzeugs erzielt werden. Daher kann vorteilhaft wenigstens ein Auflager vorgesehen sein, auf welchem das Ablaufblech aufruht, so dass eine Beweglichkeit des Ablaufblechs nach unten begrenzt ist und das Ablaufblech auf diese Weise zuverlässig oberhalb der Räder gehalten wird, wenn die Wanne nicht ihre Kippstellung einnimmt und das Fahrzeug daher verfahren werden kann. Gegenüber diesem Auflager ist das Ablaufblech nach oben verschwenkbar. Wenn die Wanne gekippt wird und das Ablaufblech sich den Rädern des Fahrzeugs nähert, kann es daher problemlos zu einem Kontakt zwischen dem Ablaufblech und den Rädern kommen. Wenn dieselbe Schwenkbewegung der Wanne dann weitergeführt wird, kann das Ablaufblech problemlos nachgeben und locker auf den Reifen des Fahrzeugs aufliegen, ohne dass es zu einer Beschädigung der Reifen oder zu einer Beschädigung bzw. Verformung des Ablaufbleches kommt.

Vorteilhaft kann vorgesehen sein, dass sich die Verschlussleiste über nahezu die gesamte Länge der Seitenklappe erstreckt oder tatsächlich über die gesamte Länge der Seitenklappe, so dass einerseits ein optimal gleichmäßiger Anlagedruck erzielt wird und die Seiteklappe zudem mittels der Verschlussleiste optimal abgedichtet wird. Bei dieser entsprechend langen Ausgestaltung der Verschlussleiste dient diese auch als Abdichtung im Übergangsbereich vom Wannenboden zum Ablaufblech.

Ein Ausführungsbeispiel der Erfindung wird anhand der rein schematischen Darstellungen nachfolgend näher erläutert. Dabei zeigt
- Fig. 1: eine perspektivische Ansicht auf die Wanne eines landwirtschaftlichen Nutzfahrzeugs,
- Fig. 2: die Wanne von Fig. 1 in einer gekippten Entladestellung und
- Fig. 3: eine perspektivische Ansicht auf die Seite der Wanne zwischen vorderen und hinteren Seitenklappen.

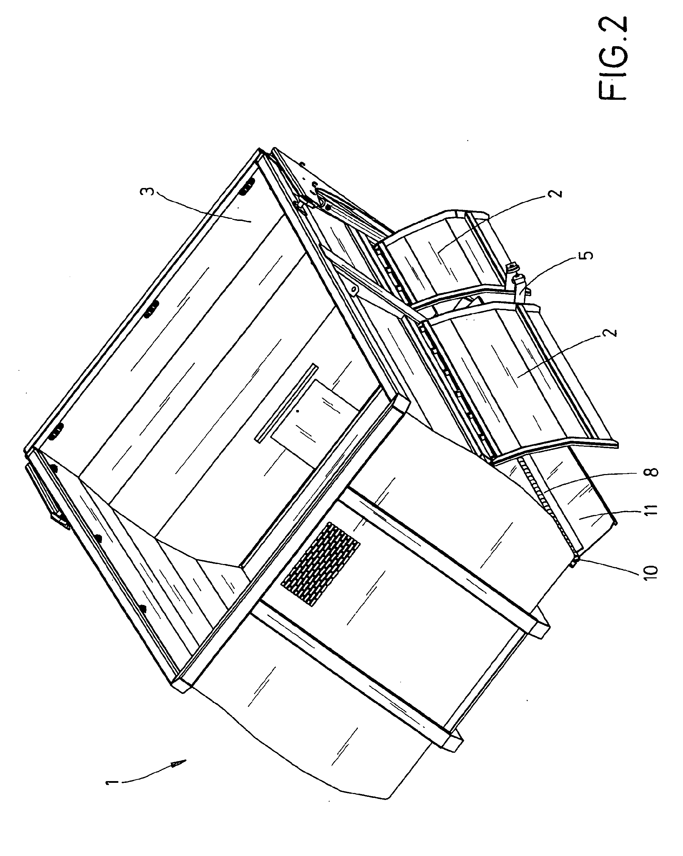

In den Zeichnungen ist mit 1 insgesamt eine Wanne bezeichnet, die zur Herstellung eines so genannten Seitenkippers dient. Ein solcher Seitenkipper kann beispielsweise als LKW oder als Anhänger ausgestaltet sein und ermöglicht es, die Wanne um eine Längsachse zu kippen, wie dies anhand von Fig. 2 verdeutlicht ist.

Die Wanne 1 weist daher zwei Seitenklappen 2 auf, nämlich eine vordere und eine hintere Seitenklappe 2, die jeweils etwa die untere Hälfte der Höhe von der Seitenwand der Wanne 1 ausmachen.

Die Wanne 1 weist zusätzlich eine Heckklappe 3 auf, so dass die Wanne 1 auch um eine Achse gekippt werden kann, die quer zur Längsrichtung der Wanne 1 verläuft. Ggf. kann an der gegenüberliegenden Längsseite der Wanne 1 ebenfalls die Anordnung von wenigstens einer Seitenklappe vorgesehen sein, so dass je nach Anzahl und Anordnung der verwendeten Klappen die Wanne 1 als Kippwanne oder als Zweiseitenkipper oder als Dreiseitenkipper ausgestaltet werden kann. Bei dem dargestellten Ausführungsbeispiel handelt es sich um einen Zweiseitenkipper, da auf der den beiden Seitenklappen 2 gegenüberliegenden Längsseite der Wanne 1 keine beweglichen Klappen vorgesehen sind.

Die Seitenklappen 2 sind entlang ihrer jeweiligen Oberkante an die übrige Seitenwand der 1 anscharniert, und zwar an jeweils mehreren Scharnierpunkten 4.

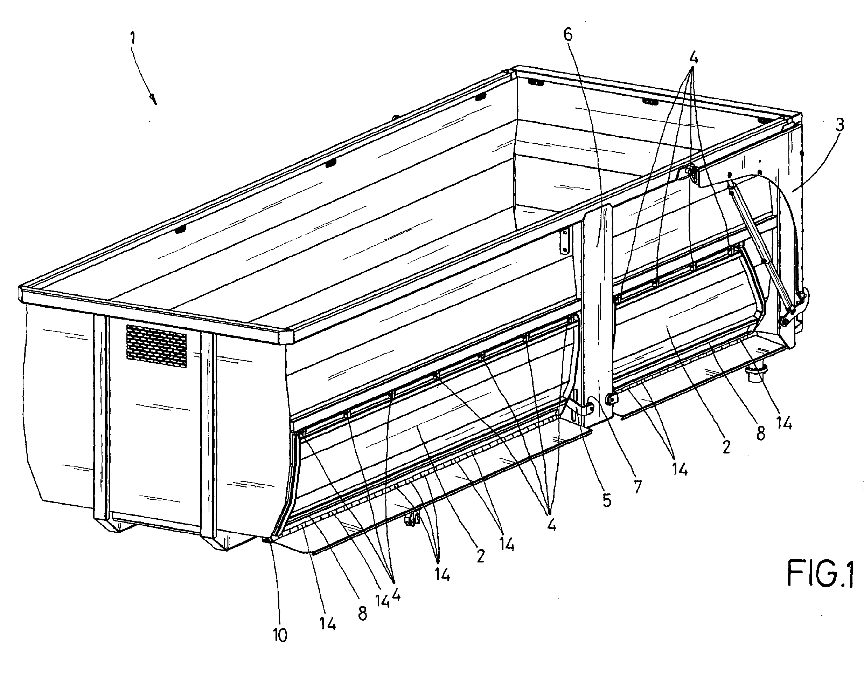

Fig. 1 zeigt die Seitenklappen 2 in ihrer Schließstellung, wobei aus Fig. 1 ersichtlich ist, dass die Wanne 1 im Querschnitt so ausgestaltet ist, dass sie sich im Vergleich zu einer maximalen Breite der Wanne 1 nach unten hin verjüngt. Dementsprechend verlaufen die Seitenklappen 2 im Querschnitt gebogen und mit ihrer unteren Kante zur Mitte der Wanne 1 hin eingezogen.

In dieser aus Fig. 1 ersichtlich Schließstellung liegen Ausleger 5 der Seitenklappen 2 einer mittleren Runge 6 der Wanne 1 an, wobei am Ende der Ausleger 5 Magnete 7 vorgesehen sind. Angesichts der gebogenen Kontur der Seitenklappen 2 ergibt sich ein Schwerpunkt dieser Seitenklappen 2, der bei zwangloser, pendelnd aufgehängter Lagerung der Seitenklappen 2 dafür sorgt, dass diese nicht ihre Schließstellung einnehmen, sondern vielmehr leicht geöffnet verbleiben. Ausgehend von einer solchen Offenstellung genügt ein leichter Druck gegen die Seitenklappen 2, um diese in ihre Schließstellung zu bewegen. In dieser Schließstellung werden die Seitenklappen 2 durch die Magnete 7 provisorisch gehalten, bis eine endgültige Verriegelung der Seitenklappen 2 erfolgt.

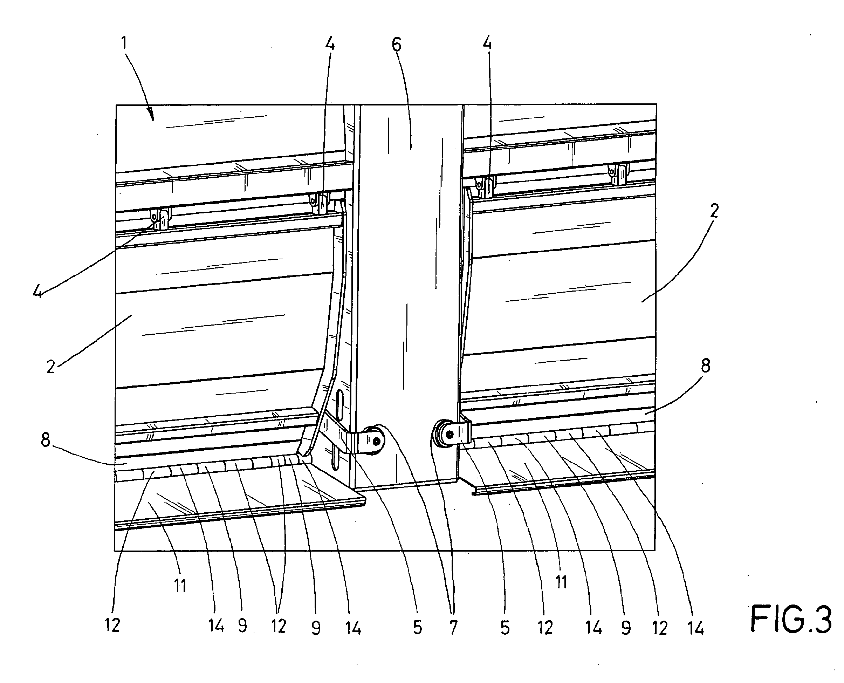

Für diese Verriegelung sind Verschlussleisten 8 vorgesehen, die sich jeweils über nahezu die gesamte Länge einer Seitenklappe 2 erstrecken. Die Verschlussleisten 8 sind vergleichsweise schmal ausgestaltet und mit Hülsen 9 versehen, die auf einer aus Fig. 1 ersichtlichen Lagerachse 10 angeordnet sind, so dass auf diese Weise die Verschlussleiste 8 um die Lagerachse 10 schwenkbar gelagert ist. Die Fig. 1 und 3 zeigen die Verschlussleiste 8 in ihrer Schließstellung. In dieser Schließstellung ist sie aufrecht angeordnet und verdeckt die Unterkante der zugeordneten Seitenklappe 2.

Fig. 2 zeigt die Verschlussleiste 8 in einer verschwenkten, nun liegend ausgerichteten Freigabestellung. Durch die Freigabe der Unterkanten der beiden Seitenklappen 2 können diese nun aus ihrer Schließstellung der Fig. 1 und 3 in die aus Fig. 2 ersichtliche Offenstellung verschwenkt werden. Diese Verschwenkung erfolgt automatisch dadurch, dass die Wanne 1, wie aus Fig. 2 ersichtlich, um ihre Längsachse angekippt wird und das Schüttgut, mit welchem die Wanne 1 beladen ist, nun einen auf die Seitenklappen 2 einwirkenden Innendruck aufbaut, der die Überwindung der Haltekräfte der Magnete 7 ermöglicht, so dass nun, nachdem die Verschlussleisten 8 geöffnet worden sind, die Seitenklappen 2 automatisch nach außen gedrückt werden und die Nutzlast durch die geöffneten Seitenklappen 2 ausströmen kann.

Die Betätigung der Verschlussleisten 8 erfolgt hydraulisch durch die Fahrzeughydraulik des Fahrzeugs, an welchem die Wanne 1 vorgesehen ist. Die Hydraulik bewirkt dabei die Überwindung eines Totpunktes, der beispielsweise mittels einer Excenter-Anordnung in einer dem Fachmann geläufigen Weise geschaffen ist, so dass unter Überwindung dieses Totpunktes die Verschlussleiste 8 aus ihrer Verriegelungsstellung in die aus Fig. 2 ersichtliche Freigabestellung bewegt werden kann.

Die Verschlussleiste 8 legt sich dabei auf ein Ablaufblech 11 auf, welches ebenfalls um die Lagerachse 10 schwenkbar ist. Diese Schwenkbeweglichkeit wird durch Hülsen 12 ermöglicht, mit denen das Ablaufblech 11 verbunden ist, ähnlich wie die Verschlussleiste 8 mit den Hülsen 9 verbunden ist. Das Ablaufblech 11 liegt, wenn sich die Wanne in ihrer horizontalen Normalstellung befindet, auf Auflagern auf, die aus den dargestellten Perspektiven nicht ersichtlich sind. Gegenüber dieser Lagerung ermöglicht die Schwenkbeweglichkeit mittels der Hülsen 12, dass die Ablaufbleche 11 nach oben verschwenkt werden können.

Die Ablaufbleche 11 sind so breit ausgestaltet, dass sie auch als Kotflügel für das die Wanne 1 tragende Fahrzeug dienen. Wenn die Wanne 1 aus ihrer beschriebenen Normalstellung in die aus Fig. 2 dargestellte angekippte Entladestellung gekippt wird, kann das Ablaufblech 11 eine etwa horizontale Ausrichtung beibehalten, wenn es beispielsweise nach einer anfänglichen Kippbewegung der Wanne 1 auf die Räder des Fahrzeugs gelangt, auf diesen aufliegt und die Wanne dann weiter verschwenkt wird, so dass eine relative Schwenkbewegung zwischen der Wanne 1 und dem Ablaufblech 11 stattfindet.

Die Wanne 1 weist ebenfalls Hülsen auf, die mit 14 gekennzeichnet sind. Aufgrund der vergleichsweise großen Anzahl der Hülsen 14 ist sichergestellt, dass die Lagerachse 10 über ihre gesamte Länge korrekt ausgerichtet verbleibt.

Wie Fig. 2 verdeutlicht, liegt bei angekippter Wanne 1 die Verschlussleiste 8 auf dem Ablaufblech 11 auf, so dass der Übergangsbereich zwischen dem Wannenboden und dem Ablaufblech 11 durch die Verschlussleiste 8 abgedichtet wird und aus der Wanne 1 strömendes Schüttgut zuverlässig seitlich bis an die Außenkante des Ablaufbleches 11 geführt wird.

Die vorgeschlagene Ausgestaltung der Verschlüsse für die Seitenklappen 2 der Wanne 1 ermöglicht eine sehr flache Bauform, so dass die Wanne 1 vergleichsweise niedrig auf einem Fahrzeugrahmen angeordnet werden kann und somit insgesamt einen niedrigen Schwerpunkt des Fahrzeugs ermöglicht.

Die Verschlussleiste 8 ist so schmal ausgestaltet, dass sie durch den Spalt verschwenkt werden kann, der sich ergibt, wenn die Seitenklappe 2 zwanglos von ihren Scharnierpunkten 4 nach unten hängt. Somit werden Beschädigungen der Verschlussleiste 8 und / oder der Seitenklappe 2 vermieden, wenn die Verschlussleiste 8 versehentlich betätigt wird, wenn die Seitenklappe 2 noch nicht geschlossen ist. Zudem wird so vermieden, dass die Seitenklappe 2 als geschlossen erscheint, weil ihr die Verschlussleiste 8 anliegt. Bei einer Befüllung der Wanne 1 könnten in einem solchen Fall Leckagen auftreten. Aufgrund der schmalen Ausgestaltung der Verschlussleiste 8 hingegen schwenkt die Verschlussleiste 8 bei nicht vorschriftsmäßig geschlossener Seitenklappe 2 unter der Unterkante der Seitenklappe 2 hindurch, so dass der Spalt unterhalb der Seitenklappe 2 und somit die Offenstellung der Seitenklappe 2 sichtbar bleibt.

## Patentansprüche

1. Schüttgut-Nutzfahrzeug,
mit einer die Nutzlast aufnehmenden Wanne,
und mit die Wanne begrenzenden Seitenwänden, welche wenigstens eine Seiteklappe aufweisen,
wobei die Seitenklappe zwischen einer Offen- und einer Schließstellung um eine von der Unterkante der Seitenklappe nach oben beabstandete und in Fahrzeuglängsrichtung verlaufende Achse beweglich ist, derart, dass bei angekippter Wanne und geöffneter Seitenklappe die Nutzlast seitlich aus der Wanne abströmen kann,
**dadurch gekennzeichnet,**
**dass** eine Verschlussleiste (8) vorgesehen ist,
welche nahe der Unterkante der Seitenklappe (2) schwenkbar gelagert ist,
in einer stehenden, als Verschlussstellung bezeichneten Ausrichtung die in ihrer Schließstellung befindliche Seitenklappe (2) entlang deren Unterkante abdichtet,
und aus der Schließstellung in eine liegende Freigabestellung beweglich ist,
und **dass** ein Ablaufblech (11) vorgesehen ist,
welches liegend ausgerichtet und von der Wanne (1) aus nach außen weisend angeordnet ist
und um dieselbe Achse wie die Verschlussleiste (8) schwenkbar gelagert ist.

2. Nutzfahrzeug nach Anspruch 1,
**dadurch gekennzeichnet,**
**dass** die Verschlussleiste (8) mittels einer Übertotpunkt-Kinematik selbsthaltend in ihrer Verschlussstellung gehalten ist.

3. Nutzfahrzeug nach Anspruch 1 oder 2,
**dadurch gekennzeichnet,**
**dass** die gemeinsame Schwenkachse in Form einer Lagerachse (10) ausgestaltet ist, auf welcher Hülsen (9, 12, 14) vorgesehen sind, die relativ zur Lagerachse (10) und um deren Längsachse beweglich sind,
wobei die Hülsen (9, 12, 14) jeweils mit der Wanne (1), der Verschlussleiste (8) oder dem Ablaufblech (11) verbunden und abwechselnd auf der Lagerachse (10) angeordnet sind.

4. Nutzfahrzeug nach einem der vorhergehenden Ansprüche,
**dadurch gekennzeichnet,**
**dass** die Seitenklappe (2) bei ungekippter Wanne (1) zwanglos eine Stellung einnimmt, in welcher entlang ihrer Unterkante ein Spalt zum Boden der Wanne (1) verläuft, und dass die Verschlussleiste (8) so schmal bemessen ist, dass sie innerhalb dieses Spalts verschwenkbar ist, einen Kontakt mit der Seitenklappe (2) vermeidend.

5. Nutzfahrzeug nach einem der vorhergehenden Ansprüche,
**dadurch gekennzeichnet,**
**dass** die Seitenklappe (2) in ihrer Schließstellung magnetisch gehalten ist.

6. Nutzfahrzeug nach einem der vorhergehenden Ansprüche,
**dadurch gekennzeichnet,**
**dass** die Verschlussleiste (8) zur Durchführung der Schwenkbewegung hydraulisch angetrieben ist.

7. Nutzfahrzeug nach einem der vorhergehenden Ansprüche,
**dadurch gekennzeichnet,**
**dass** wenigstens ein Auflager vorgesehen ist, auf welchem das Ablaufblech (11) aufruht,
und das Ablaufblech (11) vom Auflager nach oben schwenkbar gelagert ist.

8. Nutzfahrzeug nach einem der vorhergehenden Ansprüche,
**dadurch gekennzeichnet,**
**dass** die Verschlussleiste (8) sich über im wesentlichen die gesamte Länge der Seitenklappe (2) erstreckt.
